# EUROPEAN PATENT SPECIFICATION

(11) **EP 1 705 110 B1**
(45) Date of publication and mention of the grant of the patent: **24.06.2009**
(21) Application number: 06005571.2
(22) Date of filing: 17.03.2006
(51) Int. Cl.: B62M 25/04, B62L 3/02

(54) **Bicycle control device**
Steuerungsvorrichtung für ein Fahrrad
Dispositif de commande pour bicyclette

(30) Priority: 24.03.2005 US 87546
(43) Date of publication of application: 27.09.2006
(73) Proprietor: SHIMANO INC., Osaka 590-8577 (JP)
(72) Inventor: Ose, Kenji, Sakai Osaka 590-8577 (JP)
(74) Representative: Hofmann, Harald

(56) References cited:
- EP-A- 0 636 539
- DE-A1- 3 136 922
- US-A- 4 100 820
- US-A- 5 682 794
- US-A- 5 832 782
- US-A1- 2002 020 246
- US-A1- 2002 033 065
- PATENT ABSTRACTS OF JAPAN vol. 017, no. 172 (M-1392), 2 April 1993 (1993-04-02) -& JP 04 331689 A (MAEDA KOUGIYOU KK), 19 November 1992 (1992-11-19)

## Description

### BACKGROUND OF THE INVENTION

### Field of the Invention

This invention generally relates to a bicycle control device for shifting gears to change the speed of a bicycle. More specifically, the present invention relates to a bicycle control device that includes both braking and speed changing functions.

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle.

In the past, shift devices were located at a distance and were attached to the handlebar and/or frame of the bicycle. Previous devices have a shift lever located a substantial distance away from the braking lever in order to avoid contact when braking is applied. This causes a shift lever to be inconveniently located for the rider. Document US 4 100 820 describes a bicycle control device based on the preamble of claim 1, with a brake lever and a shift lever both carried on the handbrake housing, at a distance allowing the grip of both levers in a nearly simultaneous manner. In addition, these shift levers only have one operating portion for the rider to access, thereby limiting the rider's options for operating the shift lever.

In view of the above, it will be apparent to those skilled in the art from this disclosure that there exists a need for an improved bicycle control device that has a shift lever, which is conveniently located and easily operated. This invention addresses this need in the art as well as other needs, which will become apparent to those skilled in the art from this disclosure.

### SUMMARY OF THE INVENTION

One object of the present invention is to provide a bicycle control device with a shift lever conveniently located for the user.

Another object of the present invention is to provide a bicycle control device with a shift lever shaped for ease of operation.

Still yet another object of the present invention is to provide a control device with a shift lever that will not interfere with the operation of the brake lever.

The foregoing objects can basically be attained by providing a bicycle control device having a support member, a brake lever and a shift lever. The support member has a distal end and a proximal end that is configured and arranged to be coupled to a bicycle handlebar. The brake lever is pivotally coupled to the distal end of the support member in order to pivot about a brake pivot axis in a brake operating plane. The brake lever operates in the brake operating plane from a brake resting position to a brake operating position. The shift lever is pivotally coupled to the support member and extends outwardly from the support member with at least an exposed user operating portion lying in the braking operating plane. The shift lever is movable in a shift operating plane that is non-parallel to the brake operating plane. The shift lever is configured and arranged to remain stationary during movement of the brake lever along the brake operating plane, the shift lever being located between the proximal end of the support member and the brake lever, and not interfering with the brake lever when the brake lever is operated. The shift lever has one single shift resting positon from which movement always starts. An additional user operating portion extends away from the exposed user operating portion lying in the brake operating plane.

The foregoing objects can basically be attained by providing a bicycle control device having a support member, a brake lever and a shift lever. The support member has a distal end and a proximal end that is configured and arranged to be coupled to a bicycle handlebar. The brake lever is pivotally coupled to the distal end of the support member in order to pivot about a brake pivot axis in a brake operating plane. The brake lever operates in the brake operating plane from a brake resting position to a brake operating position. The shift lever is pivotally coupled to the support member and extends outwardly from a bottom surface of the support member. The shift lever has an exposed user operating portion lying in the brake operating plane. The shift lever has a shift lever attachment portion with a shift lever longitudinal axis extending through the shift lever attachment portion and the exposed user operating portion. The shift lever longitudinal axis is substantially parallel to the brake operating plane. The shift lever is movable in a shift operating plane that is non-parallel to the brake operating plane. The shift lever is configured and arranged to remain stationary during movement of the brake lever along the brake operating plane, the shift lever being located between the proximal end of the support member and the brake lever, and not interfering with the brake lever when the brake lever is operated, wherein the shift lever attachment portion and an inner wire winding mechanism are located between the distal and the proximal ends of the support member. The shift lever has one single shift resting positon from which movement always starts. An additional user operating portion extends away from the exposed user operating portion lying in the brake operating plane.

These and other objects, features, aspects and advantages of the present invention will become apparent to those skilled in the art from the following detailed description, which, taken in conjunction with the annexed drawings, discloses a preferred embodiment of the present invention.

### BRIEF DESCRIPTION OF THE DRAWINGS

Referring now to the attached drawings which form a part of this original disclosure:
Figure 1 is a right side elevational view of a conventional bicycle equipped with a pair of bicycle control devices in accordance with one embodiment of the present invention;
Figure 2 is a front elevational view of the pair of bicycle control devices on the handlebar of the conventional bicycle illustrated in Figure 1 in accordance with one embodiment of the present invention;
Figure 3 is a partial cross-sectional view of the right side bicycle control device with an inner wire winding mechanism disposed therein as taken along a section line 3-3 in Figure 2 in accordance with one embodiment of the present invention;
Figure 4 is a right side elevational view of the bicycle control device illustrated in Figures 1-3 in accordance with one embodiment of the present invention;
Figure 5 is a front elevational view of the bicycle control device illustrated in Figures 1-4 in accordance with one embodiment of the present invention;
Figure 6 is a right side elevational view of the bicycle control device illustrated in Figures 1-5 when the brake lever is pivoted towards the handlebar a maximum amount in accordance with one embodiment of the present invention;
Figure 7 is an enlarged center cross sectional view of the inner wire winding mechanism and shift lever illustrated in Figure 3 in accordance with one embodiment of the present invention;
Figure 8 is a partial cross sectional view of the inner wire winding mechanism illustrated in Figures 3 and 7 as taken along a section line 8-8 with the shift lever in a shift resting position in accordance with one embodiment of the present invention;
Figure 9 is a partial cross sectional view, similar to Figure 8, of the inner wire winding mechanism illustrated in Figures 3 and 7 with the shift lever in a first shift position in accordance with one embodiment of the present invention;
Figure 10 is a partial cross sectional view, similar to Figures 8 and 9, of the inner wire winding mechanism illustrated in Figures 3 and 7 with the shift lever in a second shift position in accordance with one embodiment of the present invention;
Figure 11 is a front elevational view of a bicycle control device for use with the conventional bicycle illustrated in Figure 1 in accordance with an arrangement, that is not an embodiment of the invention;
Figure 12 is a front elevational view of a right side bicycle control device with an electric contact assembly for use with the conventional bicycle illustrated in Figure 1 in accordance with a second embodiment of the present invention;
Figure 13 is a center cross-sectional view of the right side bicycle control device with the electric contact assembly illustrated in Figure 12 in accordance with the second embodiment of the present invention;
Figure 14 is a rear elevational view of the electric contact assembly for the bicycle control device illustrated in Figures 12 and 13 for use with the conventional bicycle illustrated in Figure 1 with the shift lever in a shift resting position in accordance with the second embodiment of the present invention;
Figure 15 is a rear elevational view of the electric contact assembly illustrated in Figure 14 with the shift lever in a first shift position in accordance with the second embodiment of the present invention;
Figure 16 is a rear elevational view of the electric contact assembly illustrated in Figures 14 and 15 with the shift lever in a second shift position in accordance with the second embodiment of the present invention; and
Figure 17 is a front elevational view of a bicycle control device with the electric contact assembly illustrated in Figures 14-16 for use with the conventional bicycle illustrated in Figure 1 in accordance with an arrangement that is not an embodiment of the invention.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims.

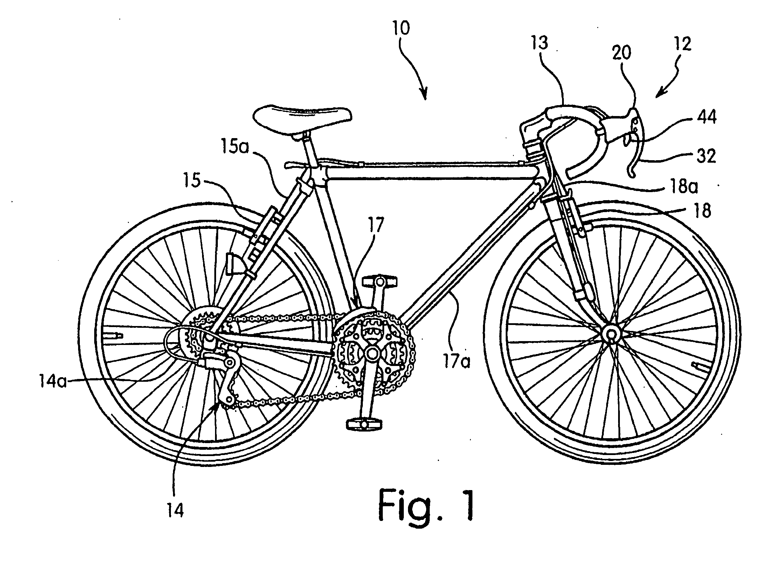

Referring initially to Figure 1, a bicycle 10 is illustrated with a pair of bicycle control devices 12 (only one shown in Figure 1) mounted on a bicycle handlebar 13 in accordance with one embodiment of the present invention. The right hand side bicycle control device 12 is operatively coupled to a rear derailleur 14 via a shift cable 14a and a rear braking device 15 via a brake cable 15a, while the left hand side bicycle control device 12 is operatively coupled to a front derailleur 17 via a shift cable 17a and a front braking device 18 via a brake cable 18a.

As used herein to describe the bicycle control device 12, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the bicycle control device 12 of the present invention.

Since most of the parts of the bicycle 10 are well known in the art, the parts of the bicycle 10 will not be discussed or illustrated in detail herein, except for the parts relating to the bicycle control devices 12 of the present invention. Moreover, various conventional bicycle parts such as brakes, derailleurs, additional sprocket, etc., which are not illustrated and/or discussed in detail herein, can be used in conjunction with the present invention.

Basically, the right and left bicycle control devices 12 are substantially identical to each other, except that they are mirror images and have different numbers of gear shifting stages. Of course, it will be apparent to those skilled in the art that bicycle control devices 12 can have any number of gear shifting positions. The number of gear shifting positions or stages will depend upon the number of gears or sprockets used in the bicycle's transmission.

In view of the similarities between the bicycle control devices 12, only one bicycle control device 12 will be discussed or illustrated in detail herein. It will be apparent to those skilled in the art from this disclosure that the description and illustrations of the bicycle control device 12 applies to the construction and operation of the other one of the bicycle control devices 12.

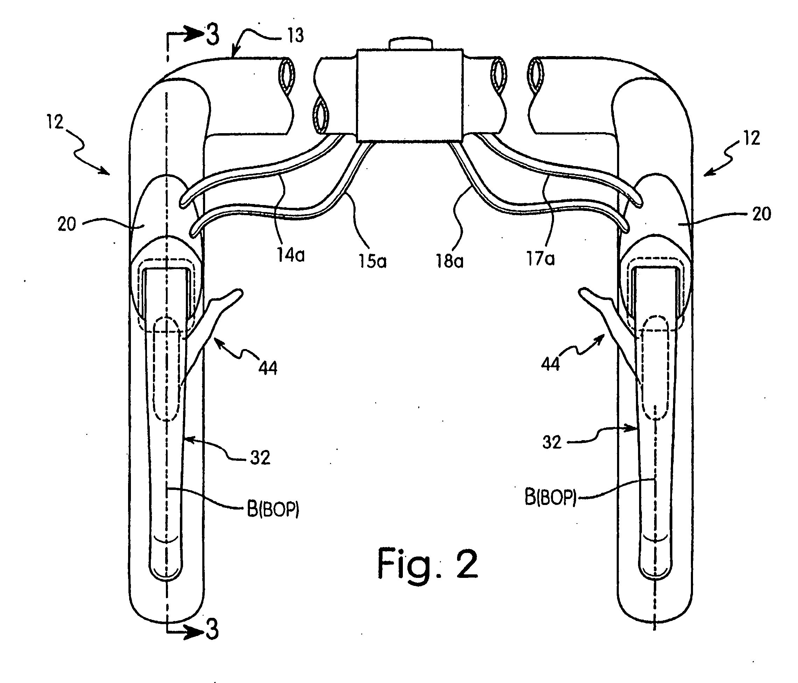

As best seen in Figures 2-6, the bicycle control device 12 basically comprises a support member 20, a brake lever 32, a shift lever 44 and an inner wire winding mechanism 54. The support member 20 is configured as a box-shaped bracket that facilitates gripping. The support member 20 has a proximal end 22 and a distal end 24. The proximal end 22 has a band element or clamp 26 secured to the bicycle handlebar 13 to secure the control device 12 to the handlebar 13. The distal end 24 of the support member 20 has a pivot pin bore 25 that pivotally supports the brake lever 32 to the support member 20. The support member further includes an inner bracket 28 and an inner bore 30. The inner bracket 28 has a stationary member 28a and is located inside the inner bore 30, which is bored into the interior of the support member 20. The inner bracket 28 supports the inner wire winding mechanism 54 inside the inner bore 30.

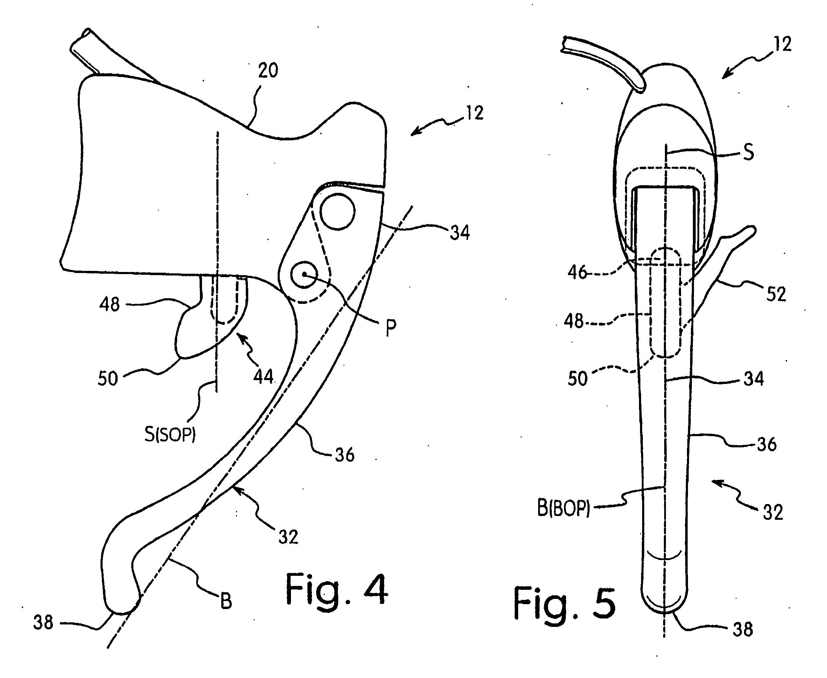

As seen in Figures 4 and 5, the brake lever 32 basically comprises a brake lever attachment portion 34, a brake lever operating portion 36 and a brake lever free end 38. A brake lever longitudinal axis B extends through the brake lever attachment portion 34 and the brake lever operating portion 36. The brake lever longitudinal axis B can be centered between the side surfaces of the brake lever attachment portion 34 and the brake lever operating portion 36, as illustrated in Figure 5.

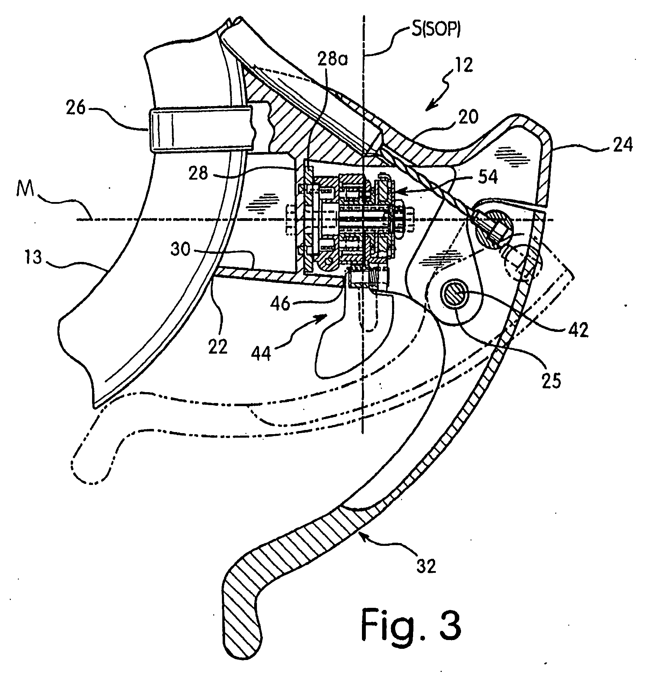

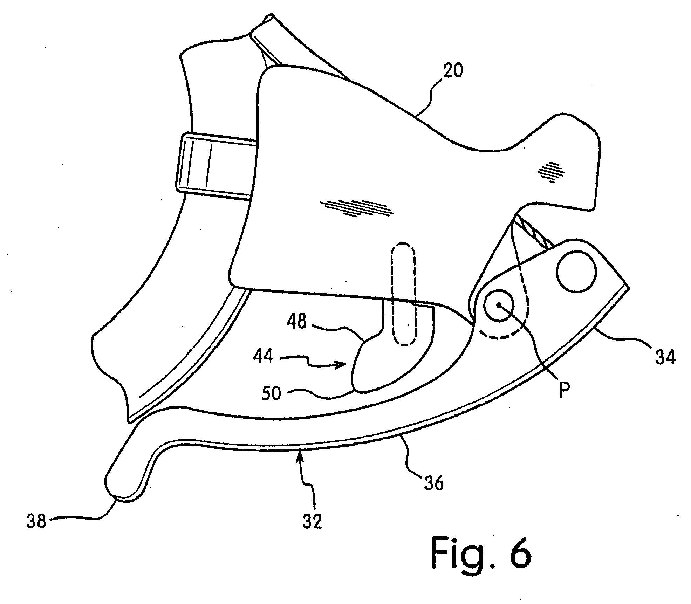

As seen in Figure 3, the brake lever 32 is pivotally connected to the support member 20 at the brake lever attachment portion 34 by a pivot pin 42 and rotates about a brake pivot axis P (shown in Figures 4 and 6), which is a non-shift pivot axis. A torsion spring or biasing element (not shown) is mounted on the pivot pin 42 to urge the brake lever 32 from a brake operating position to a brake resting position. In particular, the brake lever 32 is basically pivoted by the user pulling or squeezing the control brake lever 32 toward the handlebar 13. Thus, the brake lever 32 pivots relative to the support member 20 between the brake operating position and the brake resting position. Preferably, the brake resting position is the position of the brake lever 32 when the brake lever 32 is not in use. The brake operating position is the position of the brake lever 32 when pivoted towards the handlebar 13 a maximum amount.

The pivoting of the brake lever 32 between the brake operating position and the brake resting position defines a brake operating plane BOP. The brake operating plane BOP includes the entire path that the width and height of the brake lever attachment portion 34, the brake lever operating portion 36 and the brake lever free end 38 follow during the swing of the brake lever 32 from the brake resting position to the brake operating position and back to the brake resting position. As will be discussed in detail below the brake operating plane BOP can include at least a portion of the shift lever 44.

The shift lever 44 is located between the brake lever 32 and the proximal end 22 of the support member 20 and extends from a bottom surface of the support member 20. The shift lever 44 is configured and arranged to remain stationary during movement of the brake lever 32 along the brake operating plane BOP. The shift lever 44 basically comprises a shift lever attachment portion 46, a shift lever operating portion 48 and a shift lever free end 50. As seen in Figure 4, a shift lever longitudinal axis S extends through the shift lever attachment portion 46 and the shift lever operating portion 48. The shift lever longitudinal axis S can be centered between the side surfaces of the shift lever attachment portion 46 and the shift lever operating portion 48 as seen in Figure 5.

The shift lever attachment portion 46 is further configured to be pivotally coupled to the support member 20. The shift lever attachment end portion 46 is operatively coupled to the inner wire winding mechanism 54 inside the support member 20. The shift lever 44 is pivotally coupled to the support member 20 at the shift lever attachment portion 46 such that the shift lever 44 moves between a shift resting position, a first shift position and a second shift position about a shift pivot axis M shown in Figure 3. The pivoting of the shift lever 44 between the shift resting position and the first shift position and between the shift resting position and the second shift position defines a shift operating plane SOP. The shift lever 44 rotates about the shift pivot axis M so as to be moveable from a shift resting portion to the first shift position when moved in a first direction in the shift operating plane SOP and from the shift resting portion to the second shift position when moved in a second direction in the shift operating plane SOP. The shift lever 44 is configured and arranged so that the shift operating plane SOP is preferably substantially parallel to the brake pivot axis P.

The shift operating plane SOP includes the entire path that the width and height of the shift lever attachment portion 46, the shift lever operating portion 48 and the shift lever free end 50 follow during the swing of the shift lever 44 from the first shift position through the shift resting position to the second shift position. The shift operating plane SOP is non-parallel to the brake operating plane BOP. The shift operating plane SOP is preferably perpendicularly arranged realtive to the brake operating plane BOP.

As seen in Figure 4, the shift lever operating portion 48 is generally exposed to the user and extends outwardly, downwardly from the bottom surface of the support member 20. At least a portion of the shift lever operating portion 48 lies in the brake operating plane BOP. Preferably, a portion of the shift lever operating portion 48 that is exposed to the user lies in the brake operating plane BOP. More specifically, in the first embodiment of the present invention, the shift lever operating portion 48 is preferably disposed with respect to the brake lever 32 so the shift lever longitudinal axis S substantially aligns with the brake lever longitudinal axis B when viewed from the front side of the bicycle 10 as seen in Figure 5.

As illustrated in Figures 3 and 6, the shift lever 44 does not interfere with the brake lever 32 when the brake lever 32 is operated. The length of the shift lever 44 is less than half of the length of the brake lever 32, preferably, less than a third of the length of the brake lever 32. Accordingly, the shift lever 44 does not need to have a structure that allows it to move in the brake operating plane BOP.

An additional shift lever operating portion 52 is integrally formed with the shift lever operating portion 48. The additional shift lever operating portion 52 extends out of the brake operating plane BOP in a general upward slope towards an inner side surface of the support member 20. More specifically, the additional shift lever operating portion 52 extends away from the shift lever operating portion 48 that lies in the brake operating plane BOP. Preferably, at least a portion of the additional operating portion 52 is substantially perpendicular to the support member 20. More preferably, at least a portion of the additional operating portion 52 is extending out of an inner side surface of the support member 20. The additional operating portion 52 provides an alternative for operating the shift lever 44 that is conveniently exposed to the user. This arrangement allows for the rider to easily operate the shift lever 44.

The speed of the bicycle 10 is controlled by the inner wire winding mechanism 54 of the bicycle control device 12. The inner wire winding mechanism 54 is operatively coupled to the derailleur 14 and 17 via the shift cable 14a and 17a, respectively. The inner wire winding mechanism 54 is disposed within the support member 20 and operatively coupled to the shift lever 44.

Referring to Figures 2 and 7-10, the inner wire winding mechanism 54 is a cable winding shifting mechanism that basically operates in the same manner as described in U.S. Patent No. 5,186,072 (assigned to Shimano, Inc.). Thus, the details of the construction and operation of the inner wire winding mechanism 54 will be omitted. However, the support member 20 and the inner wire winding mechanism 54 have been configured and arranged in the present invention to improve shifting. Accordingly, the inner wire winding mechanism 54 will only be discussed and illustrated in sufficient detail to make and use the present invention.

The inner wire winding mechanism 54 includes a take-up device 56, a one-way winding device 58, a position retaining device 60, a retention cancel device 62, a restricting device 64 and a support shaft 66. The take-up device 56 is disposed within the inner bore 30 of the support member 20 and supported by the inner bracket 28 of the support member 20.

The take-up device 56 includes a wire engaging section 56a, a wire winding section 56b, a bushing 56c, a first spring 56d and a second spring 56e. The take-up device 56 is rotatable relative to the support shaft 66 and urged in a wire unwinding direction by the first spring 56d, which is mounted between the take-up device 56 and the stationary member 28a of the bracket 28. The bushing 56c is an integral part of the take-up device and surrounds the support shaft 66.

Preferably, the shift pivot axis M runs longitudinally through the support shift 66. More preferably, the shift lever 44 is pivotably supported on the support shaft 66 and rotates about the shift pivot axis M. Furthermore, the shift lever 44 is urged in the wire winding direction by the second spring 56e. In addition the shift lever 44 is operatively connected to the take-up device 56 through the one-way winding device 58.

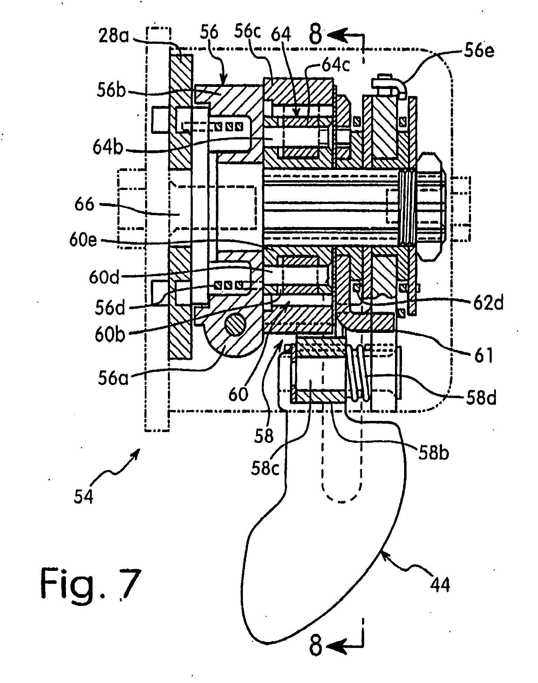

As seen in Figures 7 to 9, the one-way winding device 58 includes a plurality of one-way teeth 58a, a one-way pawl 58b pivoted to a pivot pin 58c and a third spring 58d. The one-way pawl 58b is connected to the shift lever 44 via the pivot pin 58c and is for engaging the one-way teeth 58a. The third spring 58d is for urging the one-way pawl 58b to an engaging position with the one-way teeth 58a. With this one-way transmission device 58, when the shift lever 44 is turned in the wire winding direction, the take-up device 56 is rotated in the same direction. The shift lever 44 is capable of returning in the wire unwinding direction independently of the take-up reel 56.

As shown in Figures 7-9, the position retaining device 60 includes a plurality of position retaining teeth 60a, a position retaining pawl 60b, a pawl spring 60c, a pawl shaft 60d and a pawl supporting sleeve 60e. The position retaining teeth 60a are defined on an inside peripheral wall of the bushing 56c for engagement with the position retaining pawl 60b. The position retaining pawl 60b is pivoted to the pawl shaft 60d. The pawl shaft 60d extends parallel to the support shaft 66 from the pawl supporting sleeve 60e, which is mounted on the support shaft 66.

The take-up device 56 is retained by the position retaining device 60 in stagewise stopping positions. The position retaining pawl 60b is urged by the pawl spring 60c to an engaging position. The position retaining pawl 60b and the position retaining teeth 60a have an engaging structure. This engaging structure and the pawl shaft 60d location are configured so as to allow rotation in the wire winding direction of the take-up device 56 by operation of the shift lever 44 and to prevent rotation in the wire unwinding direction by retaining the take-up device 56 in a stopping position.

The take-up device 56 is retained in position by the position retaining device 60 but is released by the retention cancel device 62. The retention cancel device includes a release element 62a, a projection 62b, a cam bore 62c and a fourth spring 62d. The projection 62b extends from the position retaining pawl 60b substantially parallel to the support shaft 66. The release element 62a defines a cam bore 62c for receiving the projection 62b. The release element 62a includes a positioning projection 61 extending from the release element 62a so as to contact the shift lever 44 to establish the shift resting position. The release element 62a is urged in the wire winding direction by the third spring 62d. When the release element 62a is rotated in the wire unwinding direction by the shift lever 44, the cam bore 62c guides the projection 62b to forcibly swing the position retaining pawl 60b out of engagement with the position retaining teeth 60a. After the take-up device 56 is freed by the retention cancel device 62, the take-up device 56 rotates in the wire unwinding direction under the force of the first spring 56d.

The restricting device 64 is a mirror image of the position retaining device 60 and includes a plurality of restricting teeth 64a, a restricting pawl shaft 64b and a restricting pawl 64c. The restricting teeth 64a are defined on an inside peripheral wall of the bushing 56c for engagement with the restricting pawl 64c. The restricting pawl 64c is pivoted to the restricting pawl shaft 64b that extends from the pawl supporting sleeve 60e.

The restricting device 64 limits the amount of rotation in the unwinding direction of the take-up device 56 during the unwinding operation by a predetermined amount. Preferably, the rotation in the unwinding direction of the take-up device 56 is limited to less than one pitch of the position retaining teeth 60a.

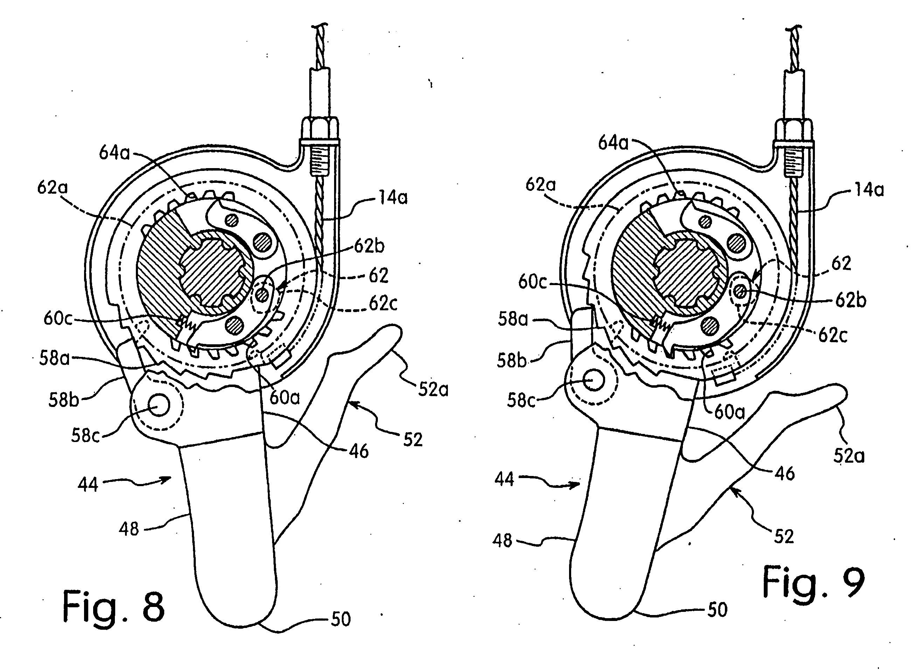

In operation, a change in speed is effected by moving the shift lever 44 in the shift operating plane SOP from the shift resting position shown in Figure 8 toward the first shift position shown in Figure 9. A force is transmitted through the one-way winding device 58 to rotate the take-up device 56 in the winding direction. When the user stops moving the shift lever 44, the take-up device 56 stops in position by the action of the position retaining device 60. The shift lever 44 returns independently of the take-up device 56 by the freeing action of the one-way winding device 58 and stops at the shift resting position by contacting the positioning projection 61. It is of course possible to effect multi-step speed changes in a single operation by shifting the shift lever 44 a corresponding amount.

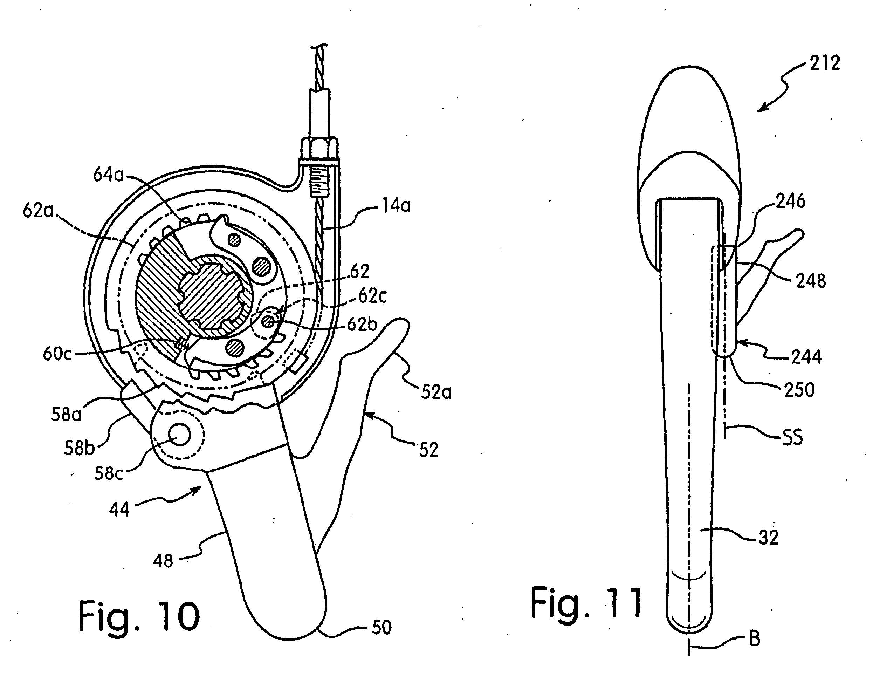

In addition, a change in speed is effected by moving the shift lever 44 in the shift operating plane SOP from the shift resting position shown in Figure 8 toward the second shift position shown in Figure 10. The release element 62a, having the positioning projection 61, rotates in the unwinding direction to cancel the action of the position retaining device 60 and to operate the restricting device 64. The restricting device 64 limits the backward rotation in the unwinding direction of the take-up device 56, preferably within one pitch of the position retaining teeth 60a. When the user stops moving the shift lever 44, the release element 62a returns in the winding direction under the force of the third spring 62d to cancel the action of the restricting device 64 and to cause the position retaining device 60 to retain the take-up device 56 in a position one step backward in the unwinding direction. At the same time, the shift lever 44 returns to the shift resting position.

Referring now to Figure 11, a bicycle control device 212 with an alternative arrangement is disclosed, which is not an embodiment of the invention. In view of the similarity between the first embodiment and this arrangement the parts of the arrangement that are identical to the parts of the first embodiment will be given the same reference numerals as the parts of the first embodiment. Moreover, the descriptions of the parts of this arrangement that are identical to the parts of the first embodiment may be omitted for the sake of brevity.

Basically, the bicycle control device 212 in this arrangement is identical to the first embodiment, except that the body of the bicycle control device 212 has been modified such that the shift lever 244 is offset from the brake operating plane BOP. Thus, the remaining parts of the bicycle control device 212 are the same as the first embodiment unless otherwise discussed and/or illustrated as being different. In other words, the shift lever 244 is identical in construction to the shift lever 44, except for its location.

The shift lever 244 basically comprises a shift lever attachment portion 246, a shift lever operating portion 248 and a shift lever free end 250. A shift lever longitudinal axis SS extends through the shift lever attachment portion 246 and the shift lever operating portion 248. The shift lever longitudinal axis SS can be centered between the side surfaces of the shift lever attachment portion 246 and the shift lever operating portion 248. The shift lever longitudinal axis SS is substantially parallel to the brake operating plane BOP. At least a portion of the shift lever operating portion 248 of the shift lever 246 is offset from the brake operating plane BOP. Preferably, at least a portion of the shift lever 244 that is exposed to the user is offset from the brake operating plane BOP. More preferably, the shift lever longitudinal axis SS is offset from the plane made by the brake lever longitudinal axis B when centered between the side surfaces of the brake lever attachment portion 34 and when operated from the brake resting position to the brake operating position. In other words, in the second embodiment of the present invention, the shift lever 244 is preferably disposed with respect to the brake lever 32 so that the shift lever longitudinal axis SS is substantially parallel to, and spaced apart from the brake lever longitudinal axis B when viewed from the front side of the bicycle 10 as shown in Figure 11.

### SECOND EMBODIMENT

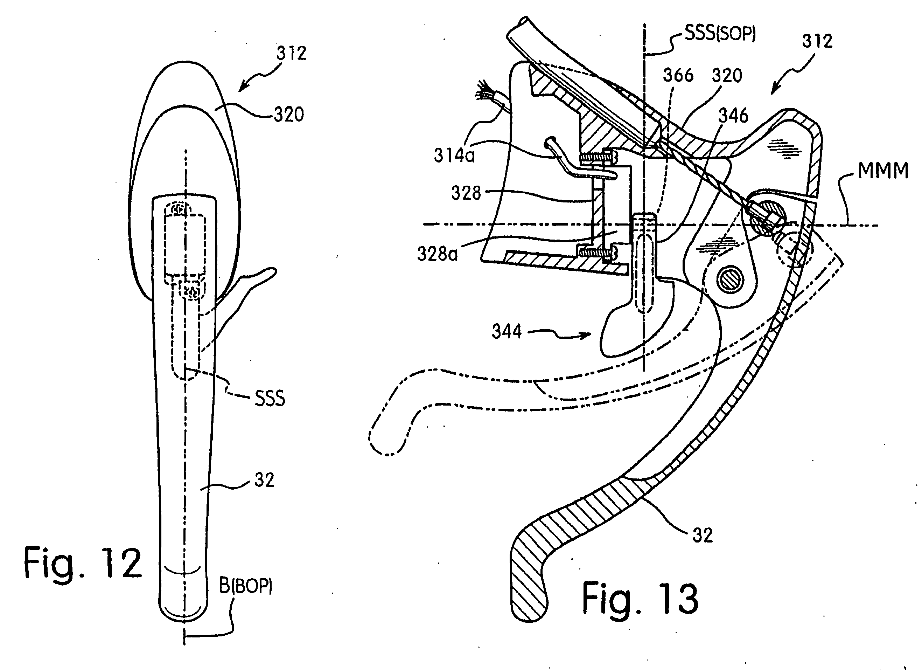

Referring now to Figures 12-16, a bicycle control device 312 in accordance with a second embodiment will now be explained. In view of the similarity between the first and second embodiments, the parts of the third embodiment that are identical to the parts of the first embodiment will be given the same reference numerals as the parts of the first embodiment. Moreover, the descriptions of the parts of the preceding arrangement that are identical to the parts of the first embodiment may be omitted for the sake of brevity.

Basically, the bicycle control device 312 in the second embodiment is identical to the first embodiment, except that the shift lever 344 is operatively coupled to an electrical component for generating an electrical signal for shifting. Thus, the remaining parts of the bicycle control device 312 are the same as the first embodiment unless otherwise discussed and/or illustrated as being different. In other words, only the shifting mechanism for the shift lever 344 and the mounting of the shifting mechanism are different in this embodiment.

The shift lever 344 is preferably located between the brake lever 32 and the proximal end of the support member 320 and extends from a bottom surface of the support member 320. More preferably, the shift lever 344 is configured and arranged to remain stationary during movement of the brake lever 32 along the brake operating plane BOP.

The shift lever 344 basically operates in the same manner as described in U.S. Patent Application No. 10/721,070 (assigned to Shimano, Inc.). Thus, the details of the construction and operation of the shift lever 344 will be omitted. However, the shift lever 344 has been configured and arranged in the present invention to improve shifting. Accordingly, the shift lever 344 will only be discussed and illustrated in sufficient detail to make and use the present invention.

Referring to Figure 13, the shift lever 344 does not interfere with the brake lever 32 when the brake lever 32 is operated. The length of the shift lever 344 is less than half of the length of the brake lever 32, preferably, less than a third of the length of the brake lever 32. Accordingly, the shift lever 344 does not need to have a structure that allows it to move in the brake operating plane BOP.

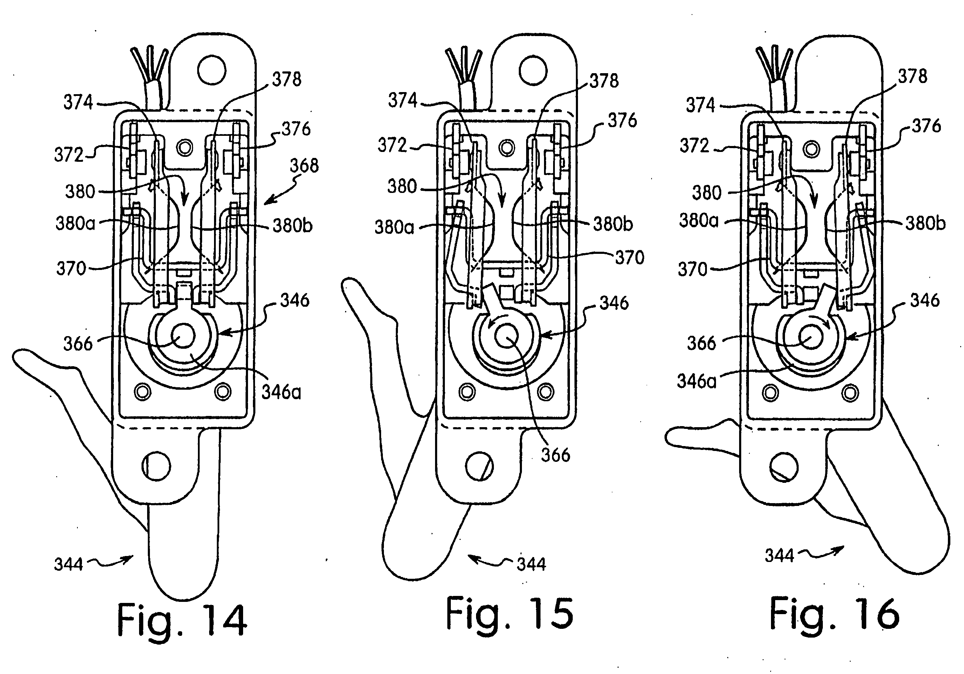

The shift lever 344 includes an attachment portion 346 having a toggle member 346a. The shift lever is pivotally coupled to the support member 320 at the shift lever attachment portion 346 and rotates about a support shaft 366, which defines a shift pivot axis MMM as shown in Figure 15. The shift lever attachment portion 346 and the toggle member rotate about the shift pivot axis MMM so as to be moveable from a shift resting position shown in Figure 12 to a first shift position shown in Figure 13 when moved in a first direction in the shift operating plane SOP and from the shift resting position shown in Figure 12 to a second shift position shown in Figure 14 when moved in a second direction in the shift operating plane SOP. The toggle member 346a is fixedly coupled to the attachment portion 346 and rotates about the support shaft 366. Thus, rotation of the shift lever 344 by the user causes the toggle member 346a to rotate therewith. The shift lever attachment portion 346 is operatively coupled to an electrical component, which is disposed in the support member 320, for generating an electrical signal for shifting.

As seen in Figures 14-16, the electrical component or electrical contact assembly 368 preferably includes a common contact bar 370, a first stationary contact 372, a first movable contact 374, a second stationary contact 376, a second movable contact 378 and a biasing element 380 formed of a pair of leaf springs 380a and 380b. Generally, when the shift lever 344 is in the shift resting position, the toggle member 346a is located centrally between the first and second movable contacts 374 and 378. In particular, the biasing element 380 holds the toggle member 346a in a rest position between the first and second movable contacts 374 and 378. However, when the user rotates the shift lever 344, this causes the toggle member 346a to pivot about the support shaft 344 and position against one of the movable contacts 374 and 378. This pivotal movement of the toggle member 346a causes one of the movable contacts 374 and 378 to be deflected such that the deflected movable contact 374 or 378 directly contacts the corresponding one of the stationary contacts 372 and 376. More specifically, when the shift lever 344 is rotated in the first direction in the shift operating plane SOP, the toggle member 346a deflects the first movable contact 374 such that the first movable contact 374 contacts the first stationary contact 372. Thus, an electrical connection is made between the first stationary contact 372 and the first movable contact 374 such that a first control signal is sent via an electric shift wire 314a to a cycle computer (not shown) in order to operate one of the derailleurs 14 and 17 to cause upshifting to occur. If the shift lever 344 is rotated in a second direction in the shift operating plane SOP, a downshift of one of the derailleurs 14 and 17 occurs. In particular, rotation of the shift lever 344 causes the toggle member 346a to deflect the second movable contact 378 against the second stationary contact 376 to result in an electrical connection therebetween. This electrical connection causes a control signal to be sent via an electric shift wire 314a to the cycle computer to cause one of the derailleurs 14 and 17 to downshift.

Referring to Figure 13, the electrical contact assembly 368 is housed inside a stationary member 328a that is attached to a bracket 328 inside the support member 320. The bracket 328 supports the stationary member 328a, the electrical contact assembly 368 and the support shaft 366 inside the support member 320. The shift lever 344 is coupled to the stationary member 328a via the support shaft 366.

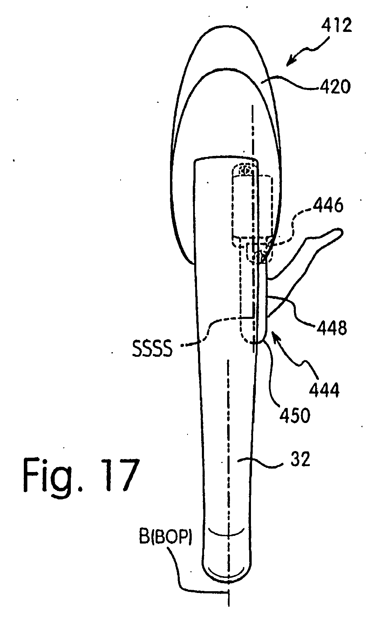

Referring now to Figure 17, a bicycle control device 412 in accordance with another arrangement will now be explained which is not an embodiment of the invention. In view of the similarity between the second and this arrangement the parts of this arrangement that are identical to the parts of the second embodiment will be given the same reference numerals as the parts of the second embodiment. Moreover, the descriptions of the parts of this arrangement that are identical to the parts of the second embodiment may be omitted for the sake of brevity.

Basically, the bicycle control device 412 in this arrangement is identical to the second embodiment, except that the shift lever 444 is offset from the brake operating plane BOP. Thus, the remaining parts of the bicycle control device 412 are the same as the second embodiment unless otherwise discussed and/or illustrated as being different. In other words, only the shifting mechanism for the shift lever 444 and the mounting of the shifting mechanism are different in this arrangement. In other words, the shift lever 444 and its shifting mechanism are identical in construction to the shift lever 344 and its shifting mechanism, except for their locations.

The shift lever 444 is preferably located between the brake lever 32 and a support member 420 and extends from a bottom surface of the support member 420. More preferably, the shift lever 444 is configured and arranged to remain stationary during movement of the brake lever 32 along the brake operating plane BOP. The shift lever 444 is further configured to be offset from the brake operating plane BOP. That is, at least a portion of the shift lever operating portion 448 of the shift lever 444 is offset from the brake operating plane BOP.

The shift lever 444 basically comprises a shift lever attachment portion 446, a shift lever operating portion 448 and a shift lever free end 450. A shift lever longitudinal axis SSSS extends through the shift lever attachment portion 446 and the shift lever operating portion 448. The shift lever longitudinal axis SSSS can be centered between the side surfaces of the shift lever attachment portion 446 and the shift lever operating portion 448. The shift lever longitudinal axis SSSS is substantially parallel to the brake operating plane BOP. At least a portion of the shift lever operating portion 448 of the shift lever 446 is offset from the brake operating plane BOP. Preferably at least a portion of the shift lever 444 that is exposed to the user is offset from the brake operating plane BOP. More preferably, the shift lever longitudinal axis SSSS is offset from the plane made by the brake lever longitudinal axis B when centered between the side surfaces of the brake lever attachment portion and when operated from the brake resting position to a the brake operating position. In other words, in this arrangement, the shift lever 444 is preferably disposed with respect to the brake lever 32 so that the shift lever longitudinal axis SSSS is substantially parallel to, and spaced apart from the brake lever longitudinal axis B when viewed from the front side of the bicycle 10 as shown in Figure 17.

In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "member" or "element" when used in the singular can have the dual meaning of a single part or a plurality of parts. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims.

## Claims

1. A bicycle control device comprising:
a support member (20; 320) having a distal end and a proximal end configured and arrange to be coupled to a bicycle handlebar;
a brake lever (32) pivotally coupled to the distal end of the support member to pivot about a brake pivot axis in a brake operating plane (BOP) from a brake resting position to a brake operating position; and
a shift lever (44; 344) pivotally coupled to the support member (20) and extending outwardly from the support member, the shift lever being movable from a shift resting position to a first shift position when moved in a first direction in a shift operating plane (SOP) that is non-parallel to the brake operating plane,
the shift lever (44; 244; 344; 444) being configured and arranged to remain stationary during movement of the brake lever along the brake operating plane, and not interfering with the brake lever when the brake lever is operated, wherein
the shift lever comprises an exposed user operating portion (48; 348) and a shift lever attachment portion (46; 346) with a shift lever longitudinal axis (S; SSS) extending through the shift lever attachment portion and the exposed user operating portion, the exposed user operating portion (48; 348) lying in the brake operating plane when the shift lever is in resting position, ,
the shift lever is located between the brake lever (32) and the proximal end of the support member and extends from a bottom surface of the support member, the shift lever longitudinal axis intersecting the support member, and in that a shift lever attachment portion (46; 346) of the shift lever and an inner wire winding mechanism (54) are located inside the support member, between the distal end and the proximal end of the support member,
**characterised in that**
the shift lever (44; 344) has one single shift resting position from which movement always starts, and
the shift lever (44; 344) includes an additional user operating portion (52) extending away from the exposed user operating portion lying in the brake operating plane.

2. The bicycle control device according to claim 1, wherein
the inner wire winding mechanism (54) disposed within the support member (20; 220; 320; 420) and operatively coupled to the shift lever (44; 244; 344; 444).

3. The bicycle control device according to claim 2, wherein
the inner wire winding mechanism (54) includes a take-up device (56) configured and arranged to be connected to an end of a shift wire and movable in a wire winding direction by the shift lever (44; 244; 344; 444), and a position retaining device (60) configured and arranged to selectively retain the take-up device in one-of a plurality of winding positions.

4. The bicycle control device according to any one of claims 1 to 3, wherein
the shift lever (44; 244; 344; 444) is moveable from a shift resting position to a first shift position when moved in a first direction in the shift operating plane and from the shift resting position to a second shift position when moved in a second direction in the shift operating plane.

5. The bicycle control device according to claim 4, wherein
the inner wire winding mechanism (54) further includes a one-way winding device (58) configured and arranged to wind the shift wire on the take-up device (56) upon movement of the shift lever in one of the first and second directions, and/or a release device (62) configured and arranged to unwind the shift wire from the take-up device upon movement of the shift lever in one of the first and second directions that is opposite to winding.

6. The bicycle control device according to any one of preceding claims, wherein
the shift lever (44; 244; 344; 444) and the take-up device (56) are coaxially and rotatably mounted on a support shaft.

7. The bicycle control device according to any one of claims 1 to 6, wherein
the shift operating plane is substantially parallel to the brake pivot axis.

8. The bicycle control device according to any one of claims 1 to 7, wherein
the shift lever (44; 244; 344; 444) includes an additional user operating portion (52) extending out of the brake operating plane.

9. The bicycle control device according to anyone of preceding claims, wherein
the additional user operating portion (52) of the shift lever is integrally formed with the exposed user operating portion.

10. The bicycle control device according to any one of preceding claims, wherein
at least a portion of the additional user operating portion (52) is substantially perpendicular to the support member.

11. The bicycle control device according to any one of preceding claims, wherein
at least a portion of the additional user operating portion (52) is extending out of an inner side surface of the support member (20).

12. The bicycle control device according to any one of preceding claims, further comprising
an electrical component (368) for generating an electrical signal for shifting disposed within the support member and operatively coupled to the shift lever.

## Patentansprüche

1. Fahrradsteuervorrichtung, umfassend:
ein Halteteil (20; 320), aufweisend ein distales Ende und ein proximales Ende, konfiguriert und angeordnet, um an eine Fahrradlenkstange gekoppelt zu werden;
einen Bremshebel (32), schwenkbar gekoppelt an das distale Ende des Halteteils, um um eine Bremsschwenkachse in einer Bremsenbetätigungsebene (BOP) von einer Bremsruheposition zu einer Bremsbetätigungsposition zu schwenken; und
einen Schalthebel (44; 344), schwenkbar gekoppelt an das Halteteil (20) und sich erstreckend nach außen von dem Halteteil, wobei der Schalthebel beweglich ist von einer Schaltruheposition zu einer ersten Schaltposition, wenn bewegt in einer ersten Richtung in einer Schaltbetätigungsebene (SOP), die nicht parallel zu der Bremsbetätigungsebene ist,
wobei der Schalthebel (44; 244; 344; 444) konfiguriert und angeordnet ist, stationär zu bleiben bei Bewegung des Bremshebels entlang der Bremsbetätigungsebene, den Bremshebel nicht beeinflussend, wenn der Bremshebel betätigt wird, wobei
der Schalthebel einen exponierten Anwenderbetätigungsabschnitt (48; 348) und einen Schalthebelanbringabschnitt (46; 346) umfasst, wobei eine Schalthebellängsachse (S; SSS) sich durch den Schalthebelanbringabschnitt und den exponierten Anwenderbetätigungsabschnitt erstreckt, wobei der exponierte Anwenderbetätigungsabschnitt (48; 348) in der Bremsbetätigungsebene liegt, wenn der Schalthebel in Ruheposition ist,
wobei der Schalthebel angeordnet ist zwischen dem Bremshebel (32) und dem proximalen Ende des Halteteils und sich erstreckt von einer Bodenfläche des Halteteils, wobei die Schalthebellängsachse das Halteteil schneidet und wobei ein Schalthebelanbringabschnitt (46; 346) des Schalthebels und ein Innendrahtwickelmechanismus (54) angeordnet sind in dem Halteteil zwischen dem distalen Ende und dem proximalen Ende des Halteteils,
**dadurch gekennzeichnet, dass**
der Schalthebel (44; 344) eine einzige Schaltruheposition aufweist, von der eine Bewegung immer ausgeht und der Schalthebel (44; 344) einen zusätzlichen Anwenderbetätigungsabschnitt (52) umfasst, sich erstreckend weg von dem exponierten Anwenderbetätigungsabschnitt, liegend in der Bremsbetätigungsebene.

2. Fahrradsteuervorrichtung gemäß Anspruch 1, wobei der Innendrahtwickelmechanismus (54) angeordnet ist in dem Halteteil (20; 220; 320; 420) und wirkgekoppelt ist an den Schalthebel (44; 244; 344; 444).

3. Fahrradsteuervorrichtung gemäß Anspruch 2, wobei der Innendrahtwickelmechanismus (54) eine Aufnahmevorrichtung (56) umfasst, konfiguriert und angeordnet, um an ein Ende eines Schaltdrahts verbunden zu werden und beweglich in einer Drahtwickelrichtung durch den Schalthebel (44; 244; 344; 444), und eine Positionshaltevorrichtung (60), konfiguriert und angeordnet, um wahlweise die Aufnahmevorrichtung in einer von einer Vielzahl von Wickelpositionen zu halten.

4. Fahrradsteuervorrichtung gemäß einem der Ansprüche 1 bis 3, wobei der Schalthebel (44; 244; 344; 444) beweglich ist von einer Schaltruheposition zu einer ersten Schaltposition, wenn bewegt in einer ersten Richtung in der Schaltbetätigungsebene, und von der Schaltruheposition zu einer zweiten Schaltposition, wenn bewegt in einer zweiten Richtung in der Schaltbetätigungsebene.

5. Fahrradsteuervorrichtung gemäß Anspruch 4, wobei der Innendrahtwickelmechanismus (54) ferner eine Einwegwickelvorrichtung (58) umfasst, konfiguriert und angeordnet, um den Schaltdraht an der Aufnahmevorrichtung (56) auf Bewegung des Schalthebels in einer der ersten und zweiten Richtungen zu wickeln, und / oder eine Freigabevorrichtung (62), konfiguriert und angeordnet, um den Schaltdraht von der Aufnahmevorrichtung auf Bewegung des Schalthebels in einer der ersten und zweiten Richtungen, die dem Wickeln entgegengesetzt ist, abzuwickeln.

6. Fahrradsteuervorrichtung gemäß einem der vorherigen Ansprüche, wobei der Schalthebel (44; 244; 344; 444) und die Aufnahmevorrichtung (56) koaxial und drehbar montiert sind an einem Halteschaft.

7. Fahrradsteuervorrichtung gemäß einem der Ansprüche 1 bis 6, wobei die Schaltbetätigungsebene im Wesentlichen parallel ist zu der Bremsschwenkachse.

8. Fahrradsteuervorrichtung gemäß einem der Ansprüche 1 bis 7, wobei der Schalthebel (44; 244; 344; 444) einen zusätzlichen Anwenderbetätigungsabschnitt (52) umfasst, sich erstreckend aus der Bremsbetätigungsebene.

9. Fahrradsteuervorrichtung gemäß einem der vorherigen Ansprüche, wobei der zusätzliche Anwenderbetätigungsabschnitt (52) des Schalthebels integral ausgebildet ist mit dem exponierten Anwenderbetätigungsabschnitt.

10. Fahrradsteuervorrichtung gemäß einem der vorherigen Ansprüche, wobei zumindest ein Abschnitt des zusätzlichen Anwenderbetätigungsabschnitts (52) im Wesentlichen senkrecht zu dem Halteteil ist.

11. Fahrradsteuervorrichtung gemäß einem der vorherigen Ansprüche, wobei zumindest ein Abschnitt des zusätzlichen Anwenderbetätigungsabschnitts (52) sich aus einer Innenseitenfläche des Halteteils (20) erstreckt.

12. Fahrradsteuervorrichtung gemäß einem der vorherigen Ansprüche, ferner umfassend eine elektrische Komponente (368) zum Erzeugen eines elektrischen Signals zum Schalten, angeordnet in dem Halteteil und wirkgekoppelt an den Schalthebel.

## Revendications

1. Dispositif de commande de bicyclette comprenant:
un élément de support (20 ; 320) ayant une extrémité distale et une extrémité proximale configuré et agencé pour être couplé à un guidon de bicyclette ;
un levier de frein (32) couplé de façon pivotante à l'extrémité distale de l'élément de support pour pivoter sur un axe pivot du frein dans un plan d'actionnement de frein (BOP), d'une position de repos du frein à une position d'actionnement du frein ; et
un levier de vitesse (44 ; 344) couplé de façon pivotante à l'élément de support (20) et s'étendant à l'extérieur de l'élément de support, le levier de vitesse étant déplaçable d'une position de repos de vitesse à une première position de vitesse, lorsque déplacé dans une première direction dans un plan d'actionnement de vitesse, qui n'est pas parallèle à la surface d'actionnement de frein,
le levier de vitesse (44 ; 244 ; 344 ; 444) étant configuré et agencé pour rester stationnaire durant le mouvement du levier de frein le long du plan d'actionnement de frein et pour ne pas gêner le levier de frein lorsque celui-ci est actionné, dans lequel
le levier de vitesse comprend une partie exposée d'actionnement par l'utilisateur (48 ; 348) et une partie de fixation du levier de vitesse (46 ; 346), un axe longitudinal du levier de vitesse (S ; SSS) s'étendant à travers la partie de fixation du levier de vitesse et la partie exposée d'actionnement par l'utilisateur , la partie exposée d'actionnement par l'utilisateur (48, 348) s'étendant dans le plan d'actionnement du frein lorsque le levier de vitesse est en position de repos,
le levier de vitesse est situé entre le levier de frein (32) et l'extrémité proximale de l'élément de support et s'étend depuis un plan inférieur de l'élément de support, l'axe longitudinal du levier de vitesse étant sécant à l'élément de support, et une partie de fixation du levier de vitesse (46 ; 346) et un mécanisme d'enroulement de câble intérieur (54) étant situés à l'intérieur de l'élément de support , entre l'extrémité distale et l'extrémité proximale de l'élément de support,
**caractérisé en ce que**
le levier de vitesse (44 ; 344) a une seule position de repos de vitesse à partir de laquelle le mouvement démarre toujours, et **en ce que** le levier de vitesse (44, 344) comprend une partie additionnelle d'actionnement par l'utilisateur (52) s'étendant en s'éloignant de la partie exposée d'actionnement par l'utilisateur s'étendant dans le plan d'actionnement de frein.

2. Dispositif de commande de bicyclette selon la revendication 1, le mécanisme d'enroulement de câble intérieur (54) étant disposé à l'intérieur de l'élément de support (20 ; 220 ; 320 ; 420) et opérativement couplé au levier de vitesse (44 ; 244 ; 344 ; 444).

3. Dispositif de commande de bicyclette selon la revendication 2, dans lequel le mécanisme d'enroulement de câble intérieur (54) comprend un dispositif d'enroulement (56) configuré et agencé pour être connecté à une extrémité d'un câble de vitesse et déplaçable par le levier de vitesse (44 ; 244 ; 344 ; 444) dans une direction d'enroulement, et un dispositif de retenue de position (60) configuré et agencé pour retenir sélectivement le dispositif d'enroulement dans l'une d'une pluralité de positions d'enroulement.

4. Dispositif de commande de bicyclette selon l'une quelconque des revendications 1 à 3, dans lequel le levier de vitesse (44 ; 244 ; 344 ; 444) est déplaçable d'une position de repos de vitesse à une première position de vitesse, lorsque déplacé dans une première direction dans le plan d'actionnement de vitesse et de la position de repos de vitesse à une seconde position de vitesse, lorsque déplacé dans une seconde position dans le plan d'actionnement de vitesse.

5. Dispositif de commande de bicyclette selon la revendication 4, dans lequel le mécanisme d'enroulement de câble intérieur (54), comprend, en outre, un dispositif d'enroulement unidirectionnel (58) configuré et agencé pour enrouler le câble de vitesse sur le dispositif d'enroulement (56) dès mouvement du levier de vitesse dans l'une des première et seconde directions , et/ou un dispositif de relâchement (62) configuré et agencé pour dérouler le câble de vitesse du dispositif d'enroulement dès mouvement du levier de vitesse dans l'une des première et seconde directions opposées à l'enroulement.

6. Dispositif de commande de bicyclette selon l'une quelconque des revendications précédentes, dans lequel le levier de vitesse (44 ; 244 ; 344 ; 444) et le dispositif d'enroulement (56) sont montés de façon coaxiale et orientable sur un arbre de support.

7. Dispositif de commande de bicyclette selon l'une quelconque des revendications 1 à 6, dans lequel le plan d'actionnement de vitesse est substantiellement parallèle à l'axe pivot du frein.

8. Dispositif de commande de bicyclette selon l'une quelconque des revendications 1 à 7, dans lequel le levier de vitesse (44 ; 244 ; 344 ; 444) comprend une partie additionnelle d'actionnement par l'utilisateur (52) s'étendant en dehors du plan d'actionnement du frein.

9. Dispositif de commande de bicyclette selon l'une quelconque des revendications précédentes, dans lequel la partie additionnelle d'actionnement par l'utilisateur (52) du levier de vitesse est intégralement formée avec la partie exposée d'actionnement par l'utilisateur.

10. Dispositif de commande de bicyclette selon l'une quelconque des revendications précédentes, dans lequel une partie au moins de la partie additionnelle d'actionnement par l'utilisateur (52) est substantiellement perpendiculaire à l'élément de support.

11. Dispositif de commande de bicyclette selon l'une quelconque des revendications précédentes, dans lequel une partie au moins de la partie additionnelle d'actionnement par l'utilisateur s'étend en dehors d'une surface latérale intérieure de l'élément de support (20).

12. Dispositif de commande de bicyclette selon l'une quelconque des revendications précédentes, comprenant, en outre, un composant électrique (368) pour générer un signal électrique pour le changement de vitesse disposé à l'intérieur de l'élément de support et couplé opérativement au levier de vitesse.
